# EUROPEAN PATENT SPECIFICATION

(11) **EP 2 033 811 B1**
(45) Date of publication and mention of the grant of the patent: **22.09.2010**
(21) Application number: 08162231.8
(22) Date of filing: 12.08.2008
(51) Int. Cl.: B60C 1/00, C08K 3/36, C08L 9/06, C09J 109/06

(54) **Pneumatic tire**
Luftreifen
Pneu

(30) Priority: 14.08.2007 US 838422
(43) Date of publication of application: 11.03.2009
(73) Proprietor: The Goodyear Tire & Rubber Company, Akron, OH 44316-0001 (US)
(72) Inventor: Schmitz, Frank, L-7782, Bissen (LU); Thielen, Georges Marcel Victor, L-4995, Schouweiler (LU); Mruk, Ralf, L-7740, Colmar-Berg (LU); Frantzen, Andreas, D-54292, Trier (DE); Loesslein, Wolfgang Albert Leo, 69207 Sandhausen (DE); Donckels, Yves, B-5360, Natoye (BE); Imhoff, Serge Julien Auguste, L-9184, Schrondweiler (LU)
(74) Representative: Kutsch, Bernd

(56) References cited:
- EP-A- 0 798 356
- EP-A- 1 260 384
- EP-A- 1 371 680
- EP-A- 1 442 900
- EP-A- 1 491 365
- EP-A- 1 685 980
- GB-A- 1 365 558
- US-A1- 2003 105 212

## Description

### Background

Adhesion between vulcanized rubber and textile reinforcement in tires is often times inadequate. While the problem of poor adhesion may exist in any type of tire, large agricultural and industrial tires and runflat tires are particular examples of tires experienced less than adequate adhesion between textile reinforcement and rubber.

Agricultural and industrial tires characteristically feature large, thick tread lugs. Cure of these tires requires long, high temperature cycles to ensure complete cure of the thickest rubber components. While the high temperature, long duration cures are necessary to cure the thicker components, the extreme conditions may have deleterious effects on other, thinner components of the tire. Such is the case with the tire carcass, the belts and other inserts of textile cords where the high cure temperatures may interfere with the development of good adhesion between the cord and the rubber coat. In particular, adhesion between polyester cords and rubber in agricultural or industrial tires is often poor at best. Adhesive systems to date used in agricultural or industrial tires to promote adhesion between the cords and rubber have not provided a sufficient degree of adhesion.

State of the art runflat tires use rayon as carcass reinforcement. The use of PET polyester treated tire cords in runflat carcass applications has been evaluated in the past with poor results, particularly in runflat mileage, due to excessive heat build up. Such is the case not only for the tire carcass, but also the belts and other inserts of textile cords where the high temperatures are detrimental to the adhesion between the cord and the rubber coat. In particular, the ability for PET polyester treated-cords to sustain an adequate interfacial bonding strength when subject to very high temperature is unsatisfactory. This poorer than desired bonding strength may occur between the adhesive/polyester surface or may peel off the polyester surface. In either case, the resultant appearance of the treated-cord is unsatisfactory, i.e., white, little presence of adhesive/elastomer along the surface.

It would be desirable, therefore, to have tires that have polyester reinforcement treated in such a way as to exhibit good adhesion to rubber even after cure at high temperature and long time, or under high temperature operating conditions.

EP-A- 1 260 384, EP-A- 1 685 980, EP-A- 1 491 365, EP-A- 1 442 900, EP-A- 1 371 680, US-A- 2003/0105212, GB-A- 1,365,558 and EP-A- 0 798 356 describe various rubber compositions and tires with such rubber compositions wherein the rubber compositions partially include reinforcing polyester cords which comprise an RFL adhesive.

### Summary

The present invention is directed to a pneumatic tire according to claim 1.

Dependent claims refer to preferred embodiments of the invention.

### Description

Conventionally, the carcass ply component of a tire is a cord-reinforced element of the tire carcass. Often two or more carcass ply components are used in a tire carcass. The carcass ply component itself is conventionally a multiple cord-reinforced component where the cords are embedded in a rubber composition which is usually referred to as a ply coat. The ply coat rubber composition is conventionally applied by calendering the rubber onto the multiplicity of cords as they pass over, around and through relatively large, heated, rotating, metal cylindrical rolls. Such carcass ply component of a tire, as well as the calendering method of applying the rubber composition ply coat, are well known to those having skill in such art. The same applies for the tire belt layers, also formed of textile cords and treated the same way as the carcass layers. Other components in the tire casing that may include a polyester cord include cap ply, bead inserts and runflat sidewall inserts.

In practice, cords of various compositions may be used for the carcass ply or belts such as, for example, rayon, aramid and nylon. Such cords and their construction, whether monofilament or as twisted filaments, are well known to those having skill in such art. In particular, polyester cords are desirable for use in tires because of their good properties and relatively low cost. However, as has been discussed herein, adhesion between the ply coat and polyester cord in tires has heretofore been less than adequate.

It has now been found that treatment of polyester cord with a an RFL comprising a presilanized silica provides for improved adhesion between the polyester and adjacent rubber in a tire.

The treatment of the polyester cord comprises treating the cord with an aqueous RFL emulsion comprising a resorcinol-formaldehyde resin, one or more elastomer latexes, and a presilanized silica.

In one embodiment, the RFL may include the resorcinol formaldehyde resin, a styrene-butadiene copolymer latex, a vinylpyridine-styrene-butadiene terpolymer latex, and a blocked isocyanate.

In one embodiment, the polyester cord may be initially treated withan aqueous emulsion comprising a polyepoxide, followed by the RFL treatment.

The polyester cord may be made from any polyester fiber suitable for use in a tire as is known in the art. Polyester cords yarns are typically produced as multifilament bundles by extrusion of the filaments from a polymer melt. Polyester cord is produced by drawing polyester fiber into yarns comprising a plurality of the fibers, followed by twisting a plurality of these yarns into a cord. Such yarns may be treated with a spin-finish to protect the filaments from fretting against each other and against machine equipment to ensure good mechanical properties. In some cases the yarn may be top-coated with a so-called adhesion activator prior to twisting the yarn into cord. The adhesion activator, typically comprising a polyepoxide, serves to improve adhesion of the polyester cord to rubber compounds after it is dipped with an RFL dip. Such dip systems are not robust against long and high temperature cures in compounds that contain traces of humidity and amines which attack the cord filament skin and degrade the adhesive / cord interface. The typical sign of failure is a nude polyester cord showing only traces of adhesive left on it.

In a treatment step, the polyester cord is dipped in an RFL liquid. In one embodiment, the RFL adhesive composition comprises resorcinol, formaldehyde and a styrene-butadiene rubber latex, a vinylpyridine-styrene-butadiene terpolymer latex, a blocked isocyanate, and a presilanized silica. The resorcinol reacts with formaldehyde to produce a resorcinol-formaldehyde reaction product. This reaction product is the result of a condensation reaction between a phenol group on the resorcinol and the aldehyde group on the formaldehyde. Resorcinol resoles and resorcinol-phenol resoles, whether formed in situ within the latex or formed separately in aqueous solution, are considerably superior to other condensation products in the adhesive mixture.

The resorcinol may be dissolved in water to which around 37 percent formaldehyde has been added together with a strong base such as sodium hydroxide. The strong base should generally constitute around 7.5 percent or less of the resorcinol, and the molar ratio of the formaldehyde to resorcinol should be in a range of from 1.5 to 2. The aqueous solution of the resole or condensation product or resin is mixed with the styrene-butadiene latex and vinylpyridine-styrene-butadiene terpolymer latex. The resole or other mentioned condensation product or materials that form said condensation product should constitute from 5 to 40 parts and preferably 10 to 28 parts by solids of the latex mixture. The condensation product forming the resole or resole type resin forming materials should preferably be partially reacted or reacted so as to be only partially soluble in water. Sufficient water is then preferably added to give 12 percent to 28 percent by weight overall solids in the final dip. The weight ratio of the polymeric solids from the latex to the resorcinol/formaldehyde resin should be in a range of 2 to 6.

The RFL adhesive may include a blocked isocyanate. In one embodiment from 1 to 8 parts by weight of solids of blocked isocyanate is added to the adhesive. The blocked isocyanate may be any suitable blocked isocyanate known to be used in RFL adhesive dips including, caprolactam blocked methylene-bis-(4-phenylisocyanate), such as Grilbond-IL6 available from EMS American Grilon, Inc., and phenol formaldehyde blocked isocyanates as disclosed in US-A- 3,226,276; US-A- 3,268,467; and US-A- 3,298,984. As a blocked isocyanate, use may be made of reaction products between one or more isocyanates and one or more kinds of isocyanate blocking agents. The isocyanates include monoisocyanates such as phenyl isocyanate, dichlorophenyl isocyanate and naphthalene monoisocyanate, diisocyanate such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc., and triisocyanates such as triphenylmethane triisocyanate, diphenylmethane triisocyanate, etc. The isocyanate-blocking agents include phenols such as phenol, cresol, and resorcinol, tertiary alcohols such as t-butanol and t-pentanol, aromatic amines such as diphenylamine, diphenylnaphthylamine and xylidine, ethyleneimines such as ethylene imine and propyleneimine, imides such as succinic acid imide, and phthalimide, lactams such as ε.-caprolactam, δ-valerolactam, and butyrolactam, ureas such as urea and diethylene urea, oximes such as acetoxime, cyclohexanoxime, benzophenon oxime, and α-pyrolidon.

The polymers may be added in the form of a latex or otherwise. In one embodiment, a vinylpyridine-styrene-butadiene terpolymer latex and styrene-butadiene rubber latex may be added to the RFL adhesive. The vinylpyridine-styrene-butadiene terpolymer may be present in the RFL adhesive such that the solids weight of the vinylpyridine-styrene-butadiene terpolymer is from 50 percent to 100 percent of the solids weight of the styrene-butadiene rubber; in other words, the weight ratio of vinylpyridine-styrene-butadiene terpolymer to styrene-butadiene rubber is from 1 to 2.

The RFL adhesive as dispersed on the polyester cord includes a presilanized silica. In one embodiment, the RFL adhesive as dispersed on the polyester cord includes from 1 to 20 weight percent of pre-silanized silica, that is, from 1 to 20 weight percent of pre-silanized silica based on the total RFL solids. In one embodiment, the RFL adhesive as dispersed on the polyester cord includes from 5 to 15 weight percent by weight of pre-silanized silica, alternatively 8 to 12 weight percent.

In one embodiment, suitable pre-silanized silica is a precipitated silica (including aggregates thereof) or fumed (pyrogenic) silica having been presilanized by prereacting precipitated silica having hydroxyl groups (e.g. silanol groups) on its surface (wherein said treatment is conducted prior to blending said silanized precipitated silica with said rubber composition) with an organomercaptoalkoxysilane or bis(3-trialkoxysilylalkyl) polysulfide having an average from 2 to 3.8 connecting sulfur atoms in its polysulfidic bridge. By prereacting, it is meant that the silica and the organomercaptoalkoxysilane or bis(3-trialkoxysilylalkyl) polysulfide are mixed prior to mixing with other components of the RFL composition, such that reaction between the silanol groups of the silica and the alkoxy groups of the organomercaptoalkoxysilane or bis(3-trialkoxysilylalkyl) polysulfide occurs prior to mixing with other RFL components. Thus, the prereacted silica and organomercaptoalkoxysilane or bis(3-trialkoxysilylalkyl) polysulfide may be considered to be a reaction product of silica and organomercaptoalkoxysilane or bis(3-trialkoxysilylalkyl) polysulfide.

The pre-silanization treatment of the precipitated silica may optionally additionally include treatment thereof with an alkylsilane, wherein the alkylsilane is of the general Formula (I)

Xₙ - Si - R₄-n (I)

wherein R is an alkyl radical having from one to 18, preferably from one to 8, carbon atoms such as, for example, methyl, ethyl, isopropyl, n-butyl and octadecyl radicals, n is a value of from 1 to 3 and X is a radical selected from halogen, namely chlorine or bromine, preferably a chlorine radical, and alkoxy radicals, preferably an alkoxy radical as (R¹O) -, wherein R¹ is an alkyl radical having from one to 3 carbon atoms such as , for example, methyl, ethyl and isopropyl radicals, preferably from methyl and ethyl radicals.

In one embodiment, the organomercaptoalkoxysilane for the pre-silanization treatment of the precipitated silica may be of the general formula (II):

(X)ₙ(R²O) ₃₋ₙ - Si - R³ - SH (II)

wherein X is a radical selected from halogen, namely chlorine or bromine, preferably a chlorine radical, and alkyl radicals having from one to 16, preferably from one to 4, carbon atoms, preferably selected from methyl, ethyl, n-propyl and n-butyl radicals; wherein R² is an alkyl radical having from one to 16, preferably from one to 4 carbon atoms, preferably selected from methyl and ethyl radicals and R³ is an alkylene radical having from one to 16, preferably from one to 4, carbon atoms, preferably a propylene radical; n is a value from zero to 3, preferably zero.

In one embodiment, the bis(3-trialkoxysilylalkyl) polysulfides are, for example, bis(3-triethoxysilylpropyl) polysulfide. Suitable bis(3-trialkoxysilylalkyl) polysulfides may, for example, have an average of from 2.2 to 2.6, or an average of from 3.2 to 3.8, connecting sulfur atoms in its polysulfidic bridge.

Representative alkylsilanes of Formula (I) are, for example, trichloro methyl silane, dichloro dimethyl silane, chloro trimethyl silane, trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane.

In one embodiment, organomercaptoalkoxysilanes of Formula (II) are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane. A representative example of silanized silica using said bis(3-trialkoxysilylalkyl) polysulfide is Coupsil™ from Degussa. A representative example of silanized silica using 3-mercaptopropyltriethoxysilane is Ciptane LP™ from PPG Industries.

In one embodiment, the bis(3-trialkoxysilylalkyl) polysulfides, for example, comprise bis (3-triethoxysilylpropyl) polysulfides having an average connecting sulfur atoms in its polysulfidic bridge in a range of from 2 to 3.8, alternatively in a range of from 2.2 to 2.6 or in a range of from 3.2 to 3.8. Representative examples of such bis(3-triethoxysilylpropyl) polysulfides are, for example Si69™ from Degussa understood to have an average connecting sulfur atoms in its polysulfidic bridge in a range of 3.2 to 3.8 and a bis(3-triethoxysilylpropyl) as Si266™ from Degussa understood to have an average connecting sulfur atoms in its polysulfidic bridge in a range of 2.2 to 2.6.

It is normally preferable to first prepare the polymer latex and then add the partially condensed condensation product. However, the ingredients (the resorcinol and formaldehyde) can be added to the polymer latex in the uncondensed form and the entire condensation can then take place in situ. The latex tends to keep longer and be more stable if it is kept at an alkaline pH level.

In one embodiment, the polyester cord is treated with polyepoxide after the polyester yarns are twisted into cords and before treatment with the RFL containing the presilanized silica. The twisted cords are dipped in an aqueous dispersion of a polyepoxide, also referred to herein as an epoxy or epoxy compound. The polyester cord may be formed from yarns that have been treated with sizing or adhesives prior to twist. Thus, cords made using conventional adhesive activated yarns, i.e., yarns treated with adhesive prior to twist, may be subsequently treated using the current methods.

As a polyepoxide, use may be made of reaction products between an aliphatic polyalcohol such as glycerine, propylene glycol, ethylene glycol, hexane triol, sorbitol, trimethylol propane, 3-methylpentanetriol, poly(ethylene glycol), poly(propylene glycol) etc. and a halohydrine such as epichlorohydrin, reaction products between an aromatic polyalcohol such as resorcinol, phenol, hydroquinoline, phloroglucinol bis(4-hydroxyphenyl)methane and a halohydrin, reaction products between a novolac type phenolic resin such as a novolac type phenolic resin, or a novolac type resorcinol resin and halohydrin. In one embodiment, the polyepoxide is derived from an ortho-cresol formaldehyde novolac resin.

The polyepoxide is used as an aqueous dispersion of a fine particle polyepoxide. In one embodiment, the polyepoxide is present in the aqueous dispersion in a concentration range of from 1 to 5 percent by weight. In another embodiment, the polyepoxide is present in the aqueous dispersion in a concentration range of from 1 to 3 percent by weight.

In one embodiment, before the treatement with the RFL containing the presilanized silica, dry polyester cord is dipped in an aqueous polyepoxide dispersion. The cord is dipped for a time sufficient to allow a dip pick up, or DPU, of between 0.3 and 0.7 percent by weight of polyepoxide. In another embodiment, the DPU is between 0.4 and 0.6 percent by weight. The DPU is defined as the dipped cord weight (after drying or curing of the dipped cord) minus the undipped cord weight, then divided by the undipped cord weight.

The polyester cord may be treated in the aqueous polyepoxide dispersion in a continuous process by drawing the cord through a dispersion bath, or by soaking the cord in batch. After dipping in the polyepoxide dispersion, the cord is dried or cured to remove the excess water, using methods as are known in the art.

In one embodiment, cord is dipped for one to three seconds in the RFL dip and dried at a temperature within the range of 120°C to 265 °C for 0.5 minutes to 4 minutes and thereafter calendered into the rubber and cured therewith. The drying step utilized will preferably be carried out by passing the cord through 2 or more drying ovens which are maintained at progressively higher temperatures. For instance, it is highly preferred to dry the cord by passing it through a first drying oven which is maintained at a temperature of 250°F (121°C) to 300°F (149°C) and then to pass it through a second oven which is maintained at a temperature which is within the range of 350°F (177°C) to 500°F (260°C). It should be appreciated that these temperatures are oven temperatures rather than the temperature of the cord being dried. The cord will preferably have a total residence time in the drying ovens which is within the range of 1 minute to 5 minutes. For example, a residence time of 30 seconds to 90 seconds in the first oven and 30 seconds to 90 seconds in the second oven could be employed.

After treatment of the polyester cord in the RFL, or initially in the polyepoxide followed by the RFL, the treated cord is incorporated into a ply layer with a rubber ply coat compound.

It is recognized that conventional compounding ingredients may be used in the preparation of the ply coat rubber composition. The ply coat, in the finished tire is sulfur cured as a component of the tire. For example, the sulfur cured ply coat rubber composition may contain conventional additives including reinforcing agents, fillers, peptizing agents, pigments, stearic acid, accelerators, sulfur-vulcanizing agents, antiozonants, antioxidants, processing oils, activators, initiators, plasticizers, waxes, pre-vulcanization inhibitors, extender oils and the like. Representative of conventional accelerators may be, for example, amines, guanidines, thioureas, thiols, thiurams, sulfenamides, dithiocarbamates and xanthates which are typically added in amounts of from 0.2 to 3 phr. Representative of sulfur-vulcanizing agents include element sulfur (free sulfur) or sulfur donating vulcanizing agents, for example, an amine disulfide, polymeric polysulfide or sulfur olefin adducts. The amount of sulfur-vulcanizing agent will vary depending on the type of rubber and particular type of sulfur-vulcanizing agent but generally range from 0.1 phr to 3 phr with a range of from 0.5 phr to 2 phr being preferred. Representative of the antidegradants which may be in the rubber composition include monophenols, bisphenols, thiobisphenols, polyphenols, hydroquinone derivatives, phosphites, phosphate blends, thioesters, naphthylamines, diphenol amines as well as other diaryl amine derivatives, para-phenylene diamines, quinolines and blended amines. Antidegradants are generally used in an amount ranging from 0.1 phr to 10 phr with a range of from 2 to 6 phr being preferred. Amine-based antidegradants, however, are not preferred in the practice of this invention. Representative of a peptizing agent that may be used is pentachlorophenol which may be used in an amount ranging from 0.1 phr to 0.4 phr with a range of from 0.2 to 0.3 phr being preferred. Representative of processing oils which may be used in the rubber composition of the present invention include, for example, aliphatic, naphthenic and aromatic oils. The processing oils may be used in a conventional amount ranging from 0 to 30 phr with a range of from 5 to 15 phr being more usually preferred. Initiators are generally used in a conventional amount ranging from 1 to 4 phr with a range of from 2 to 3 phr being preferred.

Accelerators may be used in a conventional amount. In cases where only a primary accelerator is used, the amounts range from 0.5 to 2 phr. In cases where combinations of two or more accelerators are used, the primary accelerator is generally used in amounts ranging from 0.5 to 1.5 phr and a secondary accelerator is used in amounts ranging from 0.1 to 0.5 phr. Combinations of accelerators have been known to produce a synergistic effect. Suitable types of conventional accelerators are amines, disulfides, guanidines, thioureas, thiazoles, thiurams, sulfenamides, dithiocarbamates and xanthates. Preferably, the primary accelerator is a sulfenamide. If a secondary accelerator is used, it is preferably a guanidine, dithiocarbamate or thiuram compound.

Pneumatic tires are conventionally comprised of a generally toroidal shaped casing with an outer circumferential tread adapted to the ground contacting space beads and sidewalls extending radially from and connecting said tread to said beads. The tread may be built, shaped, molded and cured by various methods which will be readily apparent to those skilled in the art.

In the case of an agricultural or industrial tire, the typical cure cycle for curing a green tire utilizes high temperatures and longer cure times than is typical for smaller, passenger type tires, as disclosed in copending US patent application serial no. 10/768,480. The longer cure times and higher temperatures of cure are sufficient to cure the thick, heavy rubber components of the agricultural or industrial tire. These components include the tread lugs which typically cure more slowly that the thinner parts of the tire. The tread lugs may have a width in a range of from 2 cm to 10 cm, alternately 5 to 10 cm, and length in a range of from 2 cm to 60 cm, alternately 5 to 60 cm, and a height in a range of from 2 cm to 10 cm, alternately 5 to 10 cm. The tread may further have a net-to-gross ratio in a range of from 15 to 40 percent as measured around the entire 360° circumference of a normally inflated and normally loaded tire contacting a flat hard surface, as described further hereinafter. Alternatively, the net-to-gross ratio may be in a range of from 15 to 30 percent. Thus, the cure cycle of high temperature and long time would be understood by one skilled in the art as characteristic of cure in an agricultural or industrial tire having thick, heavy tread lugs.

In one embodiment, the agricultural or industrial tire may be cured at a temperature ranging from 160°C to 190°C. In another embodiment, the agricultural tire may be cured at a temperature ranging from 160°C to 180°C. The agricultural tire may be cured for a time ranging from 40 minutes to 150 minutes. In another embodiment, the agricultural tire may be cured for a time ranging from 60 minutes to 120 minutes. Generally, the cure time and temperature is sufficient to cure the characteristically thick, heavy tread of the agricultural or industrial tire. The agricultural or industrial tire having thick, heavy tread is characteristically cured using the long times and high temperatures.

In the case of a runflat tire, the polyester cord treated according to the invention in at least one of the reinforcement elements in the runflat tire. The runflat tire may be as disclosed in copending US patent application serial no.10/609,165. In various embodiments, the runflat tire component may be the carcass reinforcing plies, the sidewall reinforcement, the bead area reinforcements such as flippers and chippers, and the underlay or the overlay.

The invention is further illustrated by the following examples.

### EXAMPLE 1

This example illustrates the effect of the cord treatment of the present invention on the adhesion of polyethylene terephthalate (PET) polyester cord to standard rubber compounds. Adhesive activated polyester yarns were first twisted to form polyester cords. The cords were then treated with an aqueous dispersion of a 2 percent by weight of fine particle ortho-cresol formaldehyde novolac polyepoxide resin by dipping the cord, followed by a two-step drying. The cords were then treated with an RFL dip containing an SBR latex, a vinylpyridine-styrene-butadiene latex, and a blocked isocyanate, and either carbon black or presilanized silica, by dipping the cord followed by a two-step drying. All amounts of ingredients in the RFL dip are expressed in percent by weight based on the total solids, with the solids content of the mixture constant. The total solids content of the RFL dip was maintained constant.

Polyester cord fabric samples treated using the methods of Example 1 were tested for adhesion to a standard rubber compounds containing standard amounts of additives and curatives. A PET cord fabric (1440/2 7/9 TPI) each was treated as described.

Adhesion test samples were prepared by a standard peel adhesion test on 1" wide specimens. Strip adhesion samples were made by plying up a layers of fabric with both sides coated with 0.30 mm rubber coat compound to make a rubberized fabric, followed by preparation of a sandwich of two layers of the rubberized fabric separated by a mylar window sheet. The sandwich was cured and 1" samples cut centered on each window in the mylar. The cured samples were then tested for adhesion between the rubberized fabrics in the area defined by the mylar window by 180 degree pull on a test apparatus. Percent rubber coverage on cord was determined by visual comparison. Parallel samples were cured using the indicated cure cycles. Cured samples were then tested for adhesion at the indicated test conditions. Results of the adhesion tests are shown in Tables 1 - 3 for adhesion to 3 standard rubber compounds.

**Table 1**

| Adhesion to Rubber Compound 1 1" Strip Adhesion Values, N | | |
|---|---|---|
| | **Control** | |
| **Sample No.** | **1** | **2** |
| **RFL Filler** | | |
| Carbon Black | 6.3 | 0 |
| Presilanized Silica ¹ | 0 | 7.7 |
| **Cured 20 minutes @150°C** | | |
| Test at room temperature | 225 | 421 |
| Test at 100 °C | 258 | 316 |

| | | |
|---|---|---|
| ¹ Coupsil 8113, formed by reaction of 13 parts bis(triethoxysilylpropyl)tetrasulfide per 100 parts Ultrasil VN3 silica particles), from Degussa | | |

**Table 2**

| Adhesion to Rubber Compound 2 1" Strip Adhesion Values, N | | |
|---|---|---|
| | **Control** | |
| **Sample No.** | **3** | **4** |
| **RFL Filler** | | |
| Carbon Black | 6.3 | 0 |
| Presilanized Silica¹ | 0 | 7.7 |
| **Cured 20 minutes @150°C** | | |
| Test at room temperature | 216 | 238 |
| Test at 100°C | 213 | 232 |
| **Cured 18 minutes @170°C** | | |
| Test at room temperature | 172 | 162 |

| | | |
|---|---|---|
| ¹ Coupsil 8113, formed by reaction of 13 parts bis(triethoxysilylpropyl)tetrasulfide per 100 parts Ultrasil VN3 silica particles, from Degussa | | |

**Table 3**

| Adhesion to Rubber Compound 3 1" Strip Adhesion Values, N | | | | |
|---|---|---|---|---|
| | **Control** | | | |
| **Sample No.** | **5** | **6** | **7** | **8** |
| Carbon Black | 6.3 | 0 | 0 | 0 |
| Presilanized Silica¹ | 0 | 7.7 | 5.5 | 3.3 |
| **Cure 20 min at 150°C** | | | | |
| Test at 23°C | 175.2 | 180.3 | 170.5 | 182.9 |
| Test at 100°C | 254.1 | 252.5 | 273.5 | 259 |
| **Cure 77 min at 160°C** | | | | |
| Test at 23°C | 119 | 112.4 | 110.1 | 108.7 |
| **Cure 44 min at 180°C** | | | | |
| Test at 23°C | 95.4 | 106 | 97.7 | 100.7 |

As can be seen from the adhesion data in Tables 1 through 3, the use of the presilanized silicas leads to equal or higher adhesion values than the carbon black.

## Claims

1. A pneumatic tire comprising at least one component, the at least one component comprising a rubber composition and polyester cords, the rubber composition contacting one or more reinforcing polyester cords, the polyester cords comprising an RFL adhesive disposed on the surface of the polyester cords, the RFL adhesive comprising from 1 to 20 weight percent of a presilanized silica.

2. The tire of claim 1 wherein the RFL adhesive further comprises a resorcinol-formaldehyde resin, a styrene-butadiene copolymer, a vinylpyridine-styrene-butadiene terpolymer, and a blocked isocyanate.

3. The tire of claim 1 or 2 wherein the polyester cords further comprise a polyepoxide disposed on the surface of the polyester cords.

4. The tire of at least one of the previous claims wherein the presilanized silica is a precipitated silica having been prereacted with an organomercaptoalkoxysilane or bis(3-trialkoxysilylalkyl) polysulfide having an average from 2 to 3.8 connecting sulfur atoms in its polysulfidic bridge.

5. The tire of at least one of the previous claims wherein the presilanized silica is a fumed silica having been prereacted with an organomercaptoalkoxysilane or bis(3-trialkoxysilylalkyl) polysulfide having an average from 2 to 3.8 connecting sulfur atoms in its polysulfidic bridge.

6. The tire of at least one of the previous claims wherein the presilanized silica is the reaction product of silica and an organomercaptoalkoxysilane or a bis(3-trialkoxysilylalkyl) polysulfide.

7. The tire of at least of the previous claims, wherein the presilanized silica is present in an amount ranging from 5 to 15 weight percent.

8. The tire of at least one of the previous claims wherein the at least one component is selected from the group consisting of carcass plies, cap plies, bead inserts, and sidewall inserts.

9. The tire of at least one of the previous claims, wherein the RFL adhesive comprises from 3 to 8 weight percent of the presilanized silica.

## Patentansprüche

1. Luftreifen, umfassend mindestens ein Bauteil, wobei das mindestens eine Bauteil eine Kautschukzusammensetzung und Polyesterkorde umfasst, wobei die Kautschukzusammensetzung mit einem oder mehreren Polyester-Verstärkungskorden in Kontakt ist, wobei die Polyesterkorde einen auf der Oberfläche der Polyesterkorde angeordneten RFL-Klebstoff umfassen, wobei der RFL-Klebstoff 1 bis 20 Gewichtsprozent eines präsilanisierten Silikas umfasst.

2. Reifen nach Anspruch 1, wobei der RFL-Klebstoff weiter ein Resorcinol-Formaldehyd-Harz, ein Styrol-Butadien-Copolymer, ein Vinylpyridin-Styrol-Butadien-Terpolymer und ein blockiertes Isocyanat umfasst.

3. Reifen nach Anspruch 1 oder 2, wobei die Polyesterkorde weiter ein auf der Oberfläche der Polyesterkorde angeordnetes Polyepoxid umfassen.

4. Reifen nach mindestens einem der vorgenannten Ansprüche, wobei das präsilanisierte Silika ein ausgefälltes Silika ist, das mit einem Organomercaptoalkoxysilan oder Bis(3-trialkoxysilylalkyl)polysulfid mit einem Durchschnitt von 2 bis 3,8 verbindenden Schwefelatomen in seiner Polysulfidbrücke vorreagiert wurde.

5. Reifen nach mindestens einem der vorgenannten Ansprüche, wobei das präsilanisierte Silika ein pyrogenes Silika ist, das mit einem Organomercaptoalkoxysilan oder Bis(3-trialkoxysilylalkyl)polysulfid mit einem Durchschnitt von 2 bis 3,8 verbindenden Schwefelatomen in seiner Polysulfidbrücke vorreagiert wurde.

6. Reifen nach mindestens einem der vorgenannten Ansprüche, wobei das präsilanisierte Silika das Reaktionsprodukt von Silika und einem Organomercaptoalkoxysilan oder einem Bis(3-trialkoxysilylalkyl)polysulfid ist.

7. Reifen nach mindestens einem der vorgenannten Ansprüche, wobei das präsilanisierte Silika in einer Menge vorliegt, die sich auf 5 bis 15 Gewichtsprozent beläuft.

8. Reifen nach mindestens einem der vorgenannten Ansprüche, wobei das mindestens eine Bauteil aus der Gruppe ausgewählt ist, bestehend aus Karkassenlagen, Laufstreifen-Oberteillagen, Wulsteinsätzen und Seitenwandeinsätzen.

9. Reifen nach mindestens einem der vorgenannten Ansprüche, wobei der RFL-Klebstoff 3 bis 8 Gewichtsprozent des präsilanisierten Silikas umfasst.

## Revendications

1. Bandage pneumatique comprenant au moins un composant, ledit au moins un composant comprenant une composition de caoutchouc et des câblés en polyester, la composition de caoutchouc entrant en contact avec un ou plusieurs câblés de renforcement en polyester, les câblés en polyester comprenant un adhésif RFL disposé sur la surface des câblés en polyester, l'adhésif RFL comprenant de la silice présilanisée à raison de 1 à 20 % en poids.

2. Bandage pneumatique selon la revendication 1, dans lequel l'adhésif RFL comprend en outre une résine de résorcinol-formaldéhyde, un copolymère de styrène-butadiène, un terpolymère de vinylpyridine-styrène-butadiène et un isocyanate bloqué.

3. Bandage pneumatique selon la revendication 1 ou 2, dans lequel les câblés en polyester comprennent en outre un polyépoxyde disposé sur la surface des câblés en polyester.

4. Bandage pneumatique selon au moins une des revendications précédentes, dans lequel la silice présilanisée représente une silice précipitée qui a été mise à réagir préalablement avec un organomercapto-alcoxysilane ou avec un bis (3-trialcoxysilylalkyl) polysulfure possédant en moyenne de 2 à 3,8 atomes de soufre de liaison dans son pont polysulfure.

5. Bandage pneumatique selon au moins une des revendications précédentes, dans lequel la silice présilanisée représente une silice fumée qui a été mise à réagir préalablement avec un organomercapto-alcoxysilane ou avec un bis(3-trialcoxysilylalkyl) polysulfure possédant en moyenne de 2 à 3,8 atomes de soufre de liaison dans son pont polysulfure.

6. Bandage pneumatique selon au moins une des revendications précédentes, dans lequel la silice présilanisée représente le produit réactionnel d'une silice et d'un organomercapto-alcoxysilane ou d'un bis(3-trialcoxysilylalkyl) polysulfure.

7. Bandage pneumatique selon au moins une des revendications précédentes, dans lequel la silice présilanisée est présente en une quantité qui se situe dans la plage de 5 à 15 % en poids.

8. Bandage pneumatique selon au moins une des revendications précédentes, dans lequel ledit au moins un composant est choisi parmi le groupe constitué par des nappes de carcasse, des nappes de sommet, des pièces rapportées de talons et des pièces rapportées de flancs.

9. Bandage pneumatique selon au moins une des revendications précédentes, dans lequel l'adhésif RFL comprend de la silice présilanisée à concurrence de 3 à 8 % en poids.
